# EUROPEAN PATENT APPLICATION

(11) **EP 2 568 428 A2**
(43) Date of publication of application: **13.03.2013**
(21) Application number: 12181088.1
(22) Date of filing: 20.08.2012
(51) Int. Cl.: G06Q 20/32, G07G 1/00

(54) **Encoded information reading terminal with NFC payment processing functionality**

(30) Priority: 22.08.2011 US 201113214424
(71) Applicant: Metrologic Instruments, Inc., Blackwood, NJ 08012 (US)
(72) Inventor: Kerchner, Lynn, Morristown, NJ 07962-2245 (US); Schmidt, Mark, Morristown, NJ 07962-2245 (US); Smith, Taylor, Morristown, NJ 07962-2245 (US)
(74) Representative: Houghton, Mark Phillip

(57) **Abstract**

An encoded information reading (EIR) terminal can comprise a microprocessor, a communication interface, an NFC reading device, and an EIR device, all communicatively coupled to the system bus. The EIR reading device can be provided by a bar code reading device, an RFID reading device, or a card reading device. The EIR device can be configured to perform outputting raw message data containing an encoded message or outputting decoded message data corresponding to an encoded message. The EIR terminal can be configured, responsive to completing a decoding operation by the EIR device, to initiate a payment operation using the NFC reading device. The EIR terminal can be further configured, responsive to receiving a response from an NFC tag supporting a payment protocol, to transmit a payment operation request to an external computer.

## Description

### CROSS REFERENCE TO RELATED APPLICATIONS

This application claims priority to U. S. Patent Application No. 13/214,424 filed August 22, 2011 entitled, "Encoded Information Reading Terminal with NFC Payment Processing Functionality." The priority of the above application is claimed and is incorporated herein by reference in its entirety.

### FIELD OF THE INVENTION

The present invention relates generally to encoded information reading terminals, and in particular to encoded information reading terminals comprising NFC reader device.

### BACKGROUND OF THE INVENTION

Encoded information reading (EIR) terminals equipped with two-dimensional image sensors and wireless communication interfaces are widely used in retail stores, shipping facilities, *etc.*

### SUMMARY OF THE INVENTION

In one embodiment, there is provided an encoded information reading (EIR) terminal. The EIR terminal can comprise a microprocessor, a communication interface, an NFC reading device, and an EIR device, all communicatively coupled to the system bus. The EIR reading device can be provided by a bar code reading device, an RFID reading device, or a card reading device. The EIR device can be configured to perform outputting raw message data containing an encoded message or outputting decoded message data corresponding to an encoded message. The EIR terminal can be configured, responsive to completing a decoding operation by the EIR device, to initiate a payment operation using the NFC reading device. The EIR terminal can be further configured, responsive to receiving a response from an NFC tag supporting a payment protocol, to transmit a payment operation request to an external computer.

In another embodiment, there is provided a data collection system comprising at least one EIR terminal and an external computer communicatively coupled to the EIR terminal via at least one communication network. The EIR terminal can comprise a microprocessor, a communication interface, an NFC reading device, and an EIR device, all communicatively coupled to the system bus. The EIR reading device can be provided by a bar code reading device, an RFID reading device, or a card reading device. The EIR device can be configured to perform outputting raw message data containing an encoded message or outputting decoded message data corresponding to an encoded message. The EIR terminal can be configured, responsive to completing a decoding operation by the EIR device, to initiate a payment operation using the NFC reading device. The EIR terminal can be further configured, responsive to receiving a response from an NFC tag supporting a payment protocol, to transmit a payment operation request to the external computer.

### BRIEF DESCRIPTION OF THE DRAWINGS

The objects and features of the invention can be better understood with reference to the claims and drawings described below. The drawings are not necessarily to scale, the emphasis is instead generally being placed upon illustrating the principles of the invention. Within the drawings, like reference numbers are used to indicate like parts throughout the various views.

Fig. 1 illustrates a layout diagram of a data collection system incorporating EIR terminals;

Fig. 2 illustrates a component-level diagram of an EIR terminal with NFC payment processing functionality;

Figs. 3a-3b illustrate various embodiments of multiple cell metamaterial (MTM) antennas suitable for an EIR terminal equipped with item locate functionality;

Figs. 4a and 4b illustrate an exemplary hand held EIR terminal housing.

Figs. 5a-5c illustrate an exemplary portable and remountable EIR terminal housing.

Fig. 6 illustrates an exemplary deployment of an EIR terminal within a retail store;

Fig. 7 schematically illustrates one embodiment a point-of-sale workstation comprising a decodable indicia reading terminal;

Fig. 8 illustrates one embodiment of a method of processing NFC payment transactions by an EIR terminal.

### DETAILED DESCRIPTION OF THE INVENTION

In one embodiment, there is provided an encoded information reading (EIR) terminal capable of reading bar codes, RFID tags and/or other encoded message carriers. An encoded message can be decoded into a string comprising alphanumeric and non-alphanumeric characters. Encoded message, for example, a UPC bar code that comprises twelve encoded symbol characters representing numerical digits, can be used to convey identification of the source and the model of a product. An EIR terminal can be configured to output raw message data and/or decoded message data corresponding to the encoded message.

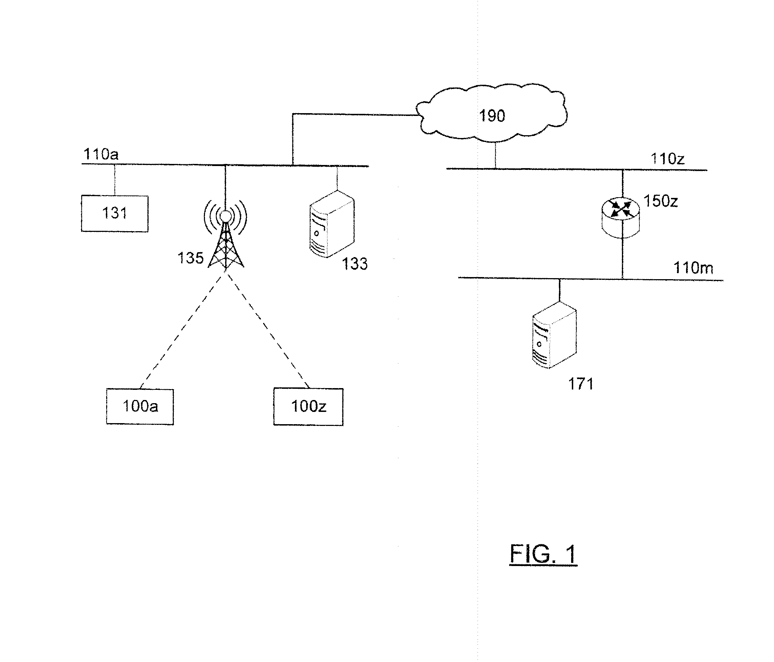

In one embodiment, schematically illustrated in Fig. 1, EIR terminal 100 can be incorporated into a retail store data collection system 1000 and can be employed at a checkout register for scanning identification tags (e.g., bar code tags) of retail items being purchased by retail customers. EIR terminal 100 can be communicatively coupled via wired or wireless interface to an external computer, including checkout register 131, a retail store server 133, and/or a remote server 171. EIR terminal 100 can comprise a near-field communication (NFC) reading device and be capable of processing NFC payment transactions for retails customers having NFC chips in their mobile phones or other NFC-enabled devices. Integration of NFC reading devices within EIR terminals could eliminate the need for installing separate payment terminals (or for upgrading an existing fleet of payment terminals) solely for enabling NFC payment processing.

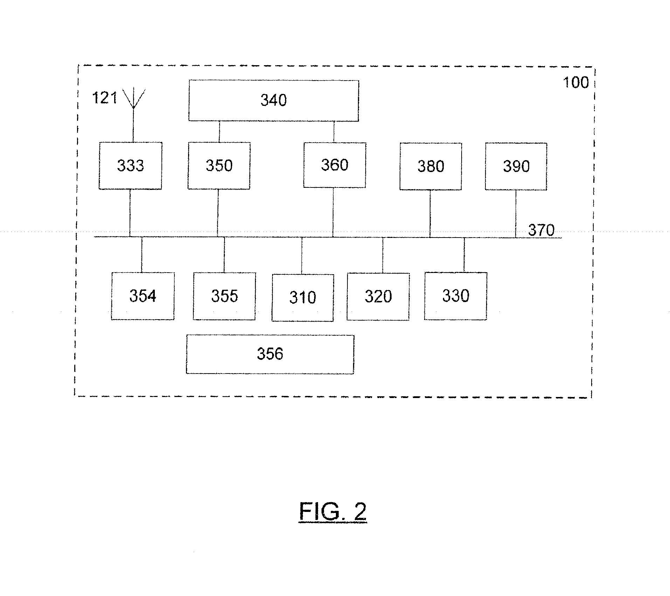

A component diagram of an illustrative embodiment of EIR terminal is shown in Fig. 2. EIR terminal 100 can comprise microprocessor 310 and memory 320, both coupled to the system bus 370. Microprocessor 310 can be provided by a general purpose microprocessor or by a specialized microprocessor (e.g., an ASIC). In one embodiment, EIR terminal 100 can comprise a single microprocessor which can be referred to as a central processing unit (CPU). In another embodiment, EIR terminal 100 can comprise two or more microprocessors, for example a CPU and a specialized microprocessor (e.g., an ASIC). In one embodiment, memory 320 can be provided by RAM, ROM, EPROM, and/or SIM card-based memory.

EIR terminal 100 can further comprise one or more EIR devices 330, including a bar code reading device, an RFID reading device, and/or a card reading device, also coupled to the system bus 370. EIR terminal 100 can further comprise an NFC reading device 333. In one embodiment, an EIR reading device can be capable of outputting decoded message data corresponding to an encoded message. In another embodiment, the EIR reading device can output raw message data comprising an encoded message, e.g., raw image data or raw RFID data.

Of course, devices that read bar codes, read RFID, or read cards bearing encoded information may read more than one of these categories while remaining within the scope of this disclosure. For example, a device that reads bar codes may include a card reader, and/or RFID reader; a device that reads RFID may also be able to read bar codes and/or cards; and a device that reads cards may be able to also read bar codes and/or RFID. For further clarity, it is not necessary that a device's primary function involve any of these functions in order to be considered such a device; for example, a cellular telephone, smartphone, or PDA that is capable of reading bar codes is an EIR terminal for purposes of this present disclosure.

EIR terminal 100 can further comprise a keyboard interface 354 and a display adapter 355, both also coupled to the system bus 370. The EIR terminal 100 can further comprise a battery 356. In one embodiment, the EIR terminal 100 can further comprise a GPS receiver 380. In one embodiment, the EIR terminal 100 can further comprise at least one connector 390 configured to receive a subscriber identity module (SIM) card.

EIR terminal 100 can further comprise at least one communication interface 310 communicatively coupled to the system/data bus 370. In one embodiment, communication interface 310 can be provided by an Ethernet interface. In another embodiment, the communication interface can be provided by a wireless communication interface. In one embodiment, the wireless communication interface can be configured to support at least one protocol of Bluetooth® protocol family. In one embodiment, the wireless communication interface can be configured to support at least one protocol of the IEEE 802.11/802.15/802.16 protocol family. In another embodiment, the wireless communication interface can be configured to support at least one protocol of the HSPA/GSM/GPRS/EDGE protocol family. In another embodiment, the wireless communication interface can be configured to support TDMA protocol. In another embodiment, the wireless communication interface can be configured to support UMTS protocol. In another embodiment, the wireless communication interface can be configured to support LTE protocol. In another embodiment, the wireless communication interface can be configured to support at least one protocol of the CDMA/1xEV-DO protocol family. A skilled artisan would appreciate the fact that other types of wired and wireless network interfaces are within the scope of this disclosure.

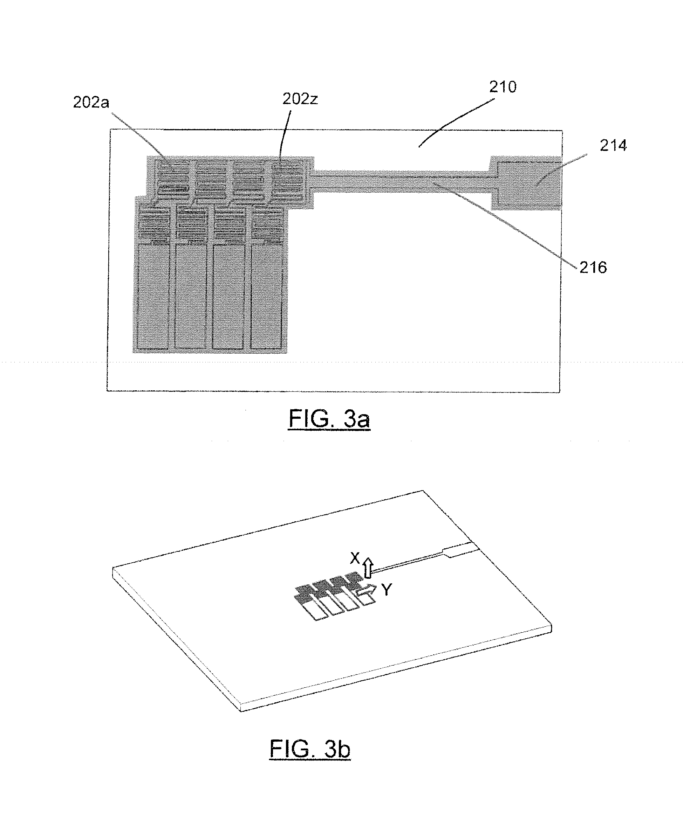

As noted herein *supra,* in one embodiment, EIR terminal 100 can comprise an NFC reading device 333. In a further aspect, the NFC reading device can comprise an antenna 121. In one embodiment, antenna 121 can be provided by a single-cell or multiple-cell transmission line MTM antenna shown in Figs. 3a (top view) and 3b (3D view). Antenna 121 can comprise one or more conductive cell patches 202a-202z that can be mounted on a dielectric substrate, provided, for example, by a printed circuit board (PCB) 210. Conductive cell patches 202a-202z can be spatially separated so that capacitive couplings between adjacent cell patches can be created. Antenna 121 can be designed to include a left-hand capacitance of a right-hand inductance. Also disposed on the dielectric substrate 210 can be a feed pad 214 that can be provided, e.g., by a metallic plate and can be connected to a conductive feed line 216. Conductive feed line 216 can be provided, e.g., by metallic a strip. Conductive feed line 216 can be located close but separately from conductive cell patches 202a-202b. A skilled artisan would appreciate the fact that MTM antennas having two or more conductive feed lines are within the scope of this disclosure. A ground plane can be provided by a metallic layer disposed on the bottom side of PCB 210 (not shown in Fig. 3a) or/and on the top side of PCB 210. In one embodiment, each cell patch can be connected to the ground plane via a zigzag line to create a left-hand inductance. In another embodiment, each cell patch can be connected to the ground plane by a via.

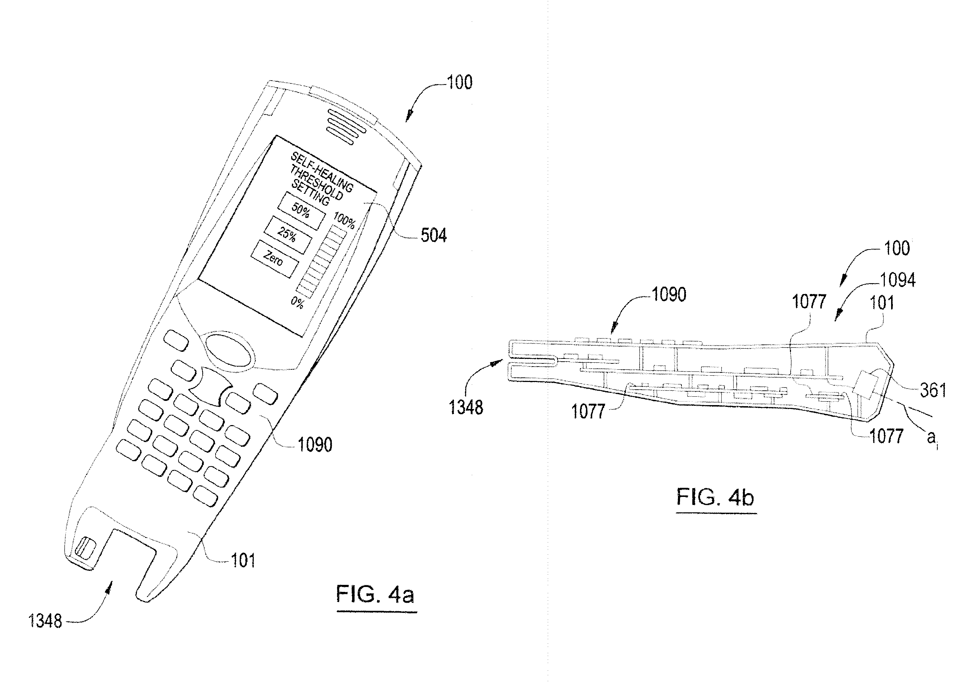

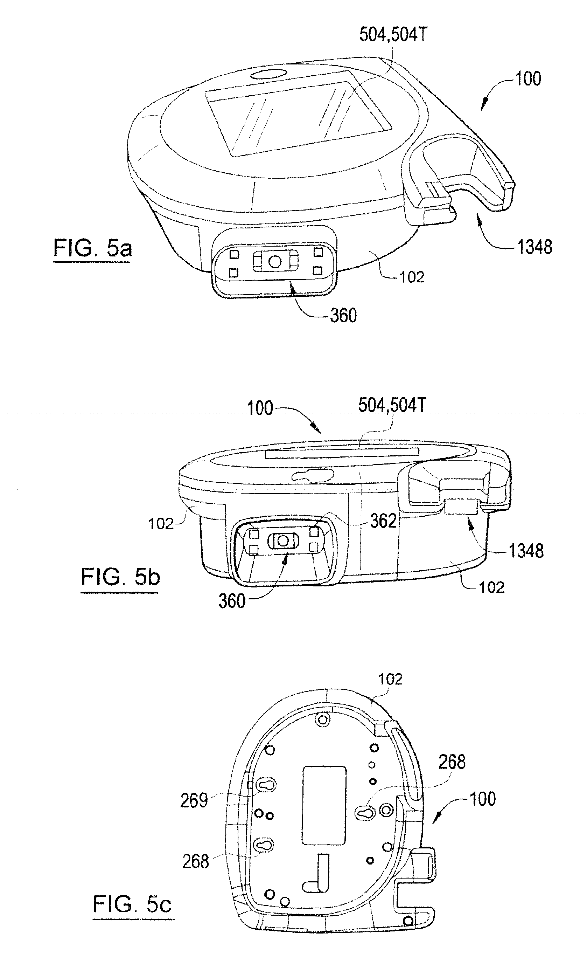

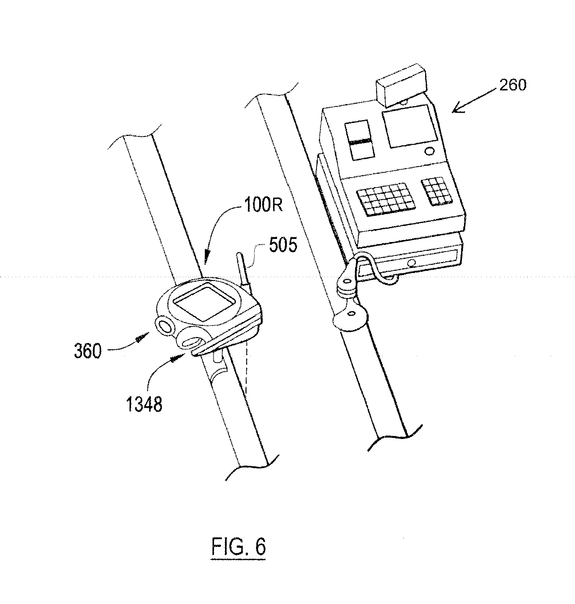

The components of EIR terminal 100 can be incorporated into a variety of different housings of various forms factors. As indicated by the embodiment of Figs. 4a and 4b, the components of an EIR terminal can be incorporated into a hand held housing 101 as shown in Figs. 4a and 4b which is shaped to be held in a human hand. EIR terminal 100 of Figs. 4a and 4b is in the form factor of a hand held portable terminal. EIR terminal 100 as shown in Figs. 4a and 4b can include a keyboard 1090 a display 504 having an associated touch screen overlay, a card reader 1348 and an imaging module 360. As indicated by the side view of Fig. 4b, the components of an EIR terminal may be supported within housing 101 on a plurality of circuit boards 1077. In the embodiment of Figs. 5a-5c, EIR terminal 100 is in the form of a transaction terminal which may be configured as a retail purchase transaction terminal or as a price verifier. Housing 102 of the transaction terminal shown in Figs. 5a-5c can be configured to be portable so that it can be moved from location to location and is further configured to be replaceably mounted on a fixed structure such as a fixed structure of a cashier station or a fixed structure of the retail store floor (e.g., a shelf, a column 264). Referring to bottom view of Fig. 5c, the housing 102 EIR terminal 100 can have formations 268 facilitating the replaceable mounting of EIR terminal 100 on a fixed structure. EIR terminal 100 can include a display 504 having an associated touch screen 504T, a card reader 1348, and an imaging module 360, and a luminous shroud 362. In the view of Fig. 6, EIR terminal 100 is installed as a retail purchase transaction terminal at a point of sale cashier station 260. A skilled artisan would appreciate the fact that other housings and form factors of EIR terminal 100 are within the scope of this disclosure.

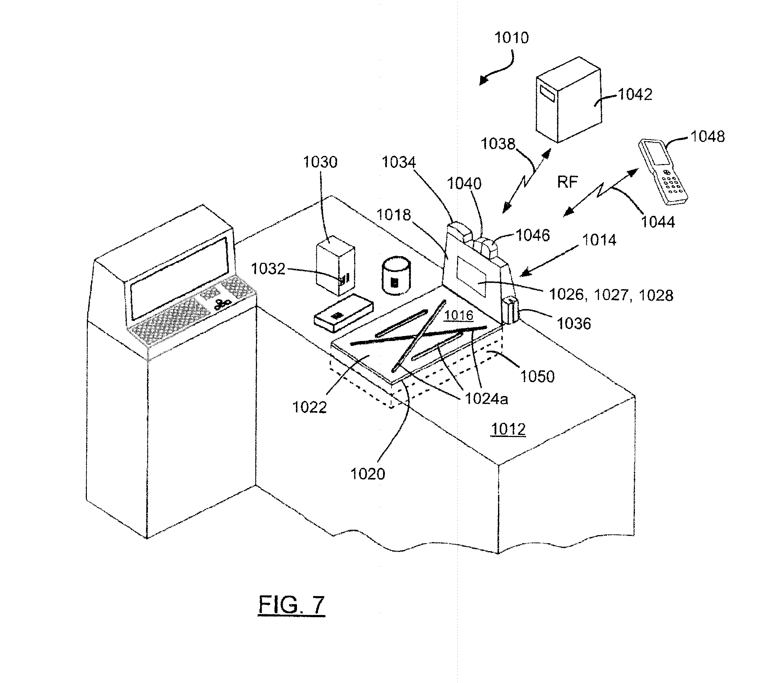

In one embodiment, EIR terminal 100 can be incorporated into a point-of-sale workstation used by retailers to process purchase transactions involving products bearing decodable indicia, e.g., a UPC symbol, as shown in Fig. 7. The point-of-sale workstation 1010 can include a horizontal countertop 1012 for placement of products to be scanned. EIR terminal 100 provided by a bi-optic scanner 1014 can be mounted within the countertop 1012. The bi-optic scanner 1014 can include a horizontally-disposed housing portion 1016 and a vertically disposed housing portion 1018 which can project from one end of the horizontally-disposed housing portion in a substantially orthogonal manner. The countertop 1012 can include an optically transparent (e.g., glass) horizontal-scanning window 1020 which can be mounted flush with the checkout counter, and can be covered by an imaging window protection plate 1022 having a pattern of apertures 1024a. These apertures 1024 permit the projection of a plurality of vertical illumination planes from a laser-based scanner located beneath the horizontal-scanning window 1020. The vertically-disposed housing portion 1018 of the bi-optic scanner 1014 can further include a vertical-scanning window 1026 behind which another laser-based scanner 1027 and/or the imager-based scanner 1028 can be housed. In another embodiment, a second imager-based scanner can be disposed behind the horizontal scanning window 1020. A skilled artisan would appreciate the fact that other ways of disposing the scanners and scanning windows are within the scope of this disclosure.
[00044] As noted herein *supra,* EIR terminal 100 can be incorporated into a retail store data collection system 1000 schematically illustrated in Fig. 1, and can be employed at a checkout register for scanning identification tags (e.g., bar code tags) of retail items being purchased by retail customers. Data collection system 1000 can include a plurality of EIR terminals 100a-100z in communication with a plurality of interconnected networks 110a-110z. EIR terminal 100 can connect to one or more networks 110a-110z, e.g., via a wireless access point 135. In one embodiment, at least one of networks 110a-110z can be provided by an IEEE 802.11x-compliant wireless network. In another embodiment, at least one of networks 110a-110z can be provided by an Ethernet network. In another embodiment, at least one of networks 110a-110z can be provided by a local area network (LAN). In another embodiment, at least one of networks 110a-110z can be provided by a wide area network (WAN). While different networks are designated herein, it is recognized that a single network as seen from the network layer of the OSI model can comprise a plurality of lower layer networks, *i.e.,* what can be regarded as a single Internet Protocol (IP) network, can include a plurality of different physical networks.

In one embodiment, EIR terminal 100 can exchange messages with one or more external computers, including, for example, checkout register 131, retail store server 133, and/or remote server 171. A "computer" herein shall refer to a programmable device for data processing, including a central processing unit (CPU) 310, a memory 320, and at least one communication interface. A computer can be provided, e.g., by a personal computer (PC) running Windows^{™} operating system. A skilled artisan would appreciate the fact that other hardware platforms and operating systems are within the spirit and the scope of the invention.

In a further aspect, EIR terminal 100 can be communicatively coupled via wired or wireless interface to checkout register 131. EIR terminal 100 can further be in communication with retail store server 133 via wireless access point 135 and network 110a. EIR terminal 100 can further be in communication with remote server 171 via wireless access point 135 and networks 110a, 110b, 110z. A skilled artisan would appreciate the fact that other methods of EIR terminal communicatively coupling to checkout register 131, store server 133, and remote server 171 are within the scope of this disclosure.

At least one of the messages transmitted by EIR terminal 100 to one or more external computers 131, 133, and/or 171 can include decoded message data corresponding to, e.g., a bar code label or an RFID label attached to a retail item. For example, EIR terminal 100 can transmit to the checkout register 131 a product identifier encoded by a bar code label attached to the product. In another example, EIR terminal 100 can transmit a request to retail store server 133 to retrieve product information corresponding to a product identifier encoded by a bar code label attached to the product.

As noted herein *supra,* EIR terminal 100 can be capable of processing NFC payment transactions for retails customers having NFC chips in their mobile phones or other NFC-enabled devices.

In one use case, after all items being purchased by a retail customer have been successfully scanned by an EIR terminal (e.g., installed at a self-checkout register), the retail customer can bring his or her NFC enabled mobile phone or other NFC-enabled device (configured to operate as an NFC target) to the close spatial proximity of the EIR terminal in order to execute a payment transaction. Thus, in one embodiment, EIR terminal 100 can attempt to initiate a payment operation after successfully scanning an item being purchased, by issuing a poll command to NFC targets located within the NFC read range of EIR terminal 100.

In another use case, after all items being purchased by a retail customer have been successfully scanned by an EIR terminal (e.g., installed at a checkout register), the checkout register operator or the retail customer can request, via a user interface action (e.g., a push button, or a touch screen button), a payment transaction to be processed by EIR terminal 100 (e.g., by selecting a payment method) is to be processed, and then the retail customer can bring his or her NFC enabled mobile phone or other NFC-enabled device (configured to operate as an NFC target) to the close spatial proximity of the EIR terminal in order to execute a payment transaction. Thus, in one embodiment, EIR terminal 100 can initiate a payment operation responsive to a user interface action, by issuing a poll command to NFC targets located within the NFC read range of EIR terminal 100.

In a further aspect, NFC reading device 333 can be compliant with *NFC Digital Protocol Technical Specification DIGITAL 1.0 NFCForum-TS-DigitalProtocol-1.0* of 2010-11-17 by NFC Forum^{™}, and can transmit a poll command (e.g., ALL_REQ or SENS_REC) to probe the operating field for NFC devices in Listen Mode. A skilled artisan would appreciate the fact that other application-level protocols suitable for payment transaction processing by NFC reading device 333 are within the scope of this disclosure.

In the above described use cases, the payment operation can be processed by a sequence of steps, including:
a) EIR terminal 100 transmitting a poll command to NFC targets located within the NFC read range of EIR terminal 100;
b) the customer's NFC enabled mobile phone or other NFC-enabled device responding to poll command;
c) EIR terminal 100 and the customer's NFC enabled mobile phone or other NFC-enabled device negotiating the payment protocol to be used (e.g., a virtual credit card, or an Automated Clearing House (ACH) transaction);
d) EIR terminal 100 transmitting a payment operation request to an external computer (e.g., a checkout register);
e) the external computer responding with an amount of payment;
f) EIR terminal 100 requesting a confirmation of the payment amount from the customer's NFC enabled mobile phone or other NFC-enabled device;
g) the customer confirming the payment amount, e.g., by entering a Personal Identification Number (PIN);
h) the customer's NFC enabled mobile phone or other NFC-enabled device transmitting the customer's confirmation to EIR terminal 100. In one embodiment, the confirmation can be accompanied by payment requisites, e.g., the number and the expiration date of a credit card, or a routing number and an account number for ACH transaction processing;
i) EIR terminal 100 transmitting the customer's confirmation to the external computer;
j) the external computer processing the payment via a remote payment processing facility (e.g., via an Automated Clearing House (ACH), a credit card transaction clearing house, *etc*.).

In a yet another use case, retail customer can bring his or her NFC-enabled mobile phone or other NFC-enabled device (configured to operate as an NFC target) to the close spatial proximity of the EIR terminal at any time during the checkout process, e.g., before all the items purchased have been successfully scanned. Thus, in one embodiment, EIR terminal 100 can initiate a payment transaction and execute the above described steps (a)-(c) responsive to detecting a response from the NFC-enabled mobile phone or other NFC-enabled device, and then complete the payment transaction and complete the above described steps (d)-(j) responsive to a user interface action indicating that all items have been successfully scanned.

In a further aspect, customer's NFC-enabled mobile phone or other NFC-enabled device can be used to identify the customer as a participant of a retailer's or anufacturer's loyalty program. EIR terminal 100 can be further configured to transmit a customer loyalty profile update request to the external computer, e.g., responsive to receiving the customer's confirmation of the payment amount.

In another aspect, customer's NFC-enabled mobile phone or other NFC-enabled device can be used to store one or more discount coupons. EIR terminal 100 can be further configured to transmit a discount coupon process request to the external computer, e.g., responsive to receiving the customer's confirmation of the payment amount.

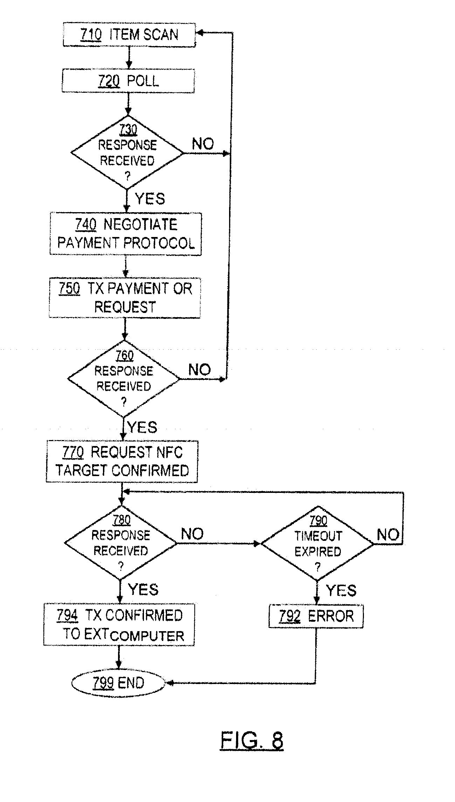

One embodiment of a method of processing NFC payment transactions by EIR terminal 100 is now being described with references to Fig. 8.

At step 710, EIR terminal 100 can, using EIR device, scan an item being purchased by a retail customer.

At step 720, EIR terminal 100 can transmit a poll command to NFC targets located within the NFC read range of EIR terminal 100.

At step 730, EIR terminal 100 can determine whether a response to the poll command has been received. If so, the processing can continue at step 740; otherwise, the method can loop back to step 710.

At step 740, EIR terminal 100 can negotiate a payment protocol with the customer's NFC-enabled payment device that responded to the poll. A payment method (e.g., a virtual credit card, or an Automated Clearing House (ACH) transaction) can be selected by the retail customer via the user interface of his or her NFC-enabled mobile phone or other NFC-enabled device, and then a payment protocol including the values of one or more parameters of the payment protocol can be negotiated by EIR terminal 100 and the customer's NFC-enabled mobile phone or other NFC-enabled device via series of requests and responses.

At step 750, EIR terminal 100 can transmit a payment operation request to an external computer (e.g., to a checkout register).

At step 760, EIR terminal 100 can determine whether a response from the external computer has been received. If so, the processing can continue at step 770; otherwise, the method can loop back to step 710.

At step 770, responsive to receiving a confirmation containing a payment amount from the external computer, EIR terminal 100 can request a confirmation of the payment amount from the customer's NFC enabled mobile phone or other NFC-enabled device.

At step 780, EIR terminal 100 can determine whether a response from the customer's NFC enabled mobile phone or other NFC-enabled device has been received. If so, the processing can continue at step 794; otherwise, the method can branch to step 790.

At step 780, EIR terminal 100 can determine whether a timeout for awaiting a response from the customer's NFC enabled mobile phone or other NFC-enabled device has expired. If so, the processing can continue at step 792; otherwise, the method can loop back to step 780.

At step 792, EIR terminal 100 can display an error message informing the terminal's s operator that a payment operation could not be processed, and the processing can terminate at step 799.

At step 794, EIR terminal 100 can, responsive to receiving a confirmation of the payment amount from the customer's NFC enabled mobile phone or other NFC-enabled device, transmit the customer's confirmation to the external computer; the processing can terminate at step 799.

While the present invention has been particularly shown and described with references to certain exemplary embodiments, it will be understood by one skilled in the art that various changes in detail may be affected therein without departing from the spirit and scope of the invention as defined by claims that can be supported by the written description and drawings. Further, where exemplary embodiments are described with reference to a certain number of elements it will be understood that the exemplary embodiments can be practiced utilizing less than the certain number of elements.

A small sample of systems methods and apparatus that are described herein is as follows:
A1. An encoded information reading (EIR) terminal comprising:
   a microprocessor communicatively coupled to a system bus;
   a communication interface communicatively coupled to said system bus;
   an EIR device communicatively coupled to said system bus, the EIR device selected from the group consisting of: a bar code reading device, an RFID reading device, and a card reading device, said EIR device configured to perform one of: outputting raw message data containing an encoded message, outputting decoded message data corresponding to an encoded message;
   an NFC reading device communicatively coupled to said system bus;
   wherein said EIR terminal is configured, responsive to completing a decoding operation by said EIR device, to initiate a payment operation using said NFC reading device; and
   wherein said EIR terminal is further configured, responsive to receiving a response from an NFC target supporting a payment protocol, to transmit a payment operation request to an external computer via said communication interface.
A2. The EIR terminal of A1, wherein said communication interface is provided by one of: a wired communication interface, a wireless communication interface.
A3. The EIR terminal of A1, wherein said EIR terminal is further configured, responsive to receiving a payment amount from said external computer, to transmit said payment amount to said NFC target.
A4. The EIR terminal of A1, wherein said EIR terminal is further configured, responsive to receiving a payment amount from said external computer, to transmit said payment amount to said NFC target; and
   wherein said EIR terminal is further configured, responsive to receiving a payment confirmation from said NFC target, to transmit said payment confirmation to said external computer.
A5. The EIR terminal of A1, wherein said payment operation request comprises one of: credit card data, ACH transaction data.
A6. The EIR terminal of A1, wherein said EIR terminal is further configured to transmit a customer loyalty profile update request to said external computer.
A7. The EIR terminal of A1, wherein said EIR terminal is further configured to transmit a discount coupon process request to said external computer.
B 1. A data collection system comprising:
   at least one EIR terminal comprising a microprocessor communicatively coupled to a system bus, a communication interface communicatively coupled to said system bus, an NFC reading device communicatively coupled to said system bus, an EIR device communicatively coupled to said system bus, the EIR device selected from the group consisting of: a bar code reading device, an RFID reading device, and a card reading device, said EIR device configured to perform one of: outputting raw message data containing an encoded message, outputting decoded message data corresponding to an encoded message;
   an external computer communicatively coupled to said at least one EIR terminal via at least one communication network;
   wherein said EIR terminal is configured, responsive to completing a decoding operation by said EIR device, to initiate a payment operation using said NFC reading device; and
   wherein said EIR terminal is further configured, responsive to receiving a response from an NFC target supporting a payment protocol, to transmit a payment operation request to said external computer.
B2. The data collection system of B1, wherein said external computer is provided by one of: a checkout register, a self-checkout register.
B3. The data collection system of B1, wherein said at least one network is provided by one of: a wired network, a wireless network.
B4. The data collection system of B1, wherein said EIR terminal is further configured, responsive to receiving a payment amount from said external computer, to transmit said payment amount to said NFC target.
B5. The data collection system of B1, wherein said EIR terminal is further configured, responsive to receiving a payment amount from said external computer, to transmit said payment amount to said NFC target; and
   wherein said EIR terminal is further configured, responsive to receiving a payment confirmation from said NFC target, to transmit said payment confirmation to said external computer.
B6. The data collection system of B1, wherein said payment operation request comprises one of: credit card data, ACH transaction data.
B7. The data collection system of B1, wherein said EIR terminal is further configured to transmit a customer loyalty profile update request to said external computer.
B8. The data collection system of B1, wherein said EIR terminal is further configured to transmit a discount coupon process request to said external computer.

## Claims

1. An encoded information reading (EIR) terminal comprising:
a microprocessor communicatively coupled to a system bus;
a communication interface communicatively coupled to said system bus;
an EIR device communicatively coupled to said system bus, the EIR device selected from the group consisting of: a bar code reading device, an RFID reading device, and a card reading device, said EIR device configured to perform one of: outputting raw message data containing an encoded message, outputting decoded message data corresponding to an encoded message;
an NFC reading device communicatively coupled to said system bus;
wherein said EIR terminal is configured, responsive to completing a decoding operation by said EIR device, to initiate a payment operation using said NFC reading device; and
wherein said EIR terminal is further configured, responsive to receiving a response from an NFC target supporting a payment protocol, to transmit a payment operation request to an external computer via said communication interface.

2. The EIR terminal of claim 1, wherein said communication interface is provided by one of: a wired communication interface, a wireless communication interface.

3. The EIR terminal of claim 1, wherein said EIR terminal is further configured, responsive to receiving a payment amount from said external computer, to transmit said payment amount to said NFC target.

4. The EIR terminal of claim 1, wherein said EIR terminal is further configured, responsive to receiving a payment amount from said external computer, to transmit said payment amount to said NFC target; and
wherein said EIR terminal is further configured, responsive to receiving a payment confirmation from said NFC target, to transmit said payment confirmation to said external computer.

5. The EIR terminal of claim 1, wherein said payment operation request comprises one of:
credit card data, ACH transaction data.

6. The EIR terminal of claim 1, wherein said EIR terminal is further configured to transmit a customer loyalty profile update request to said external computer.

7. The EIR terminal of claim 1, wherein said EIR terminal is further configured to transmit a discount coupon process request to said external computer.

8. A data collection system comprising:
at least one EIR terminal comprising a microprocessor communicatively coupled to a system bus, a communication interface communicatively coupled to said system bus, an NFC reading device communicatively coupled to said system bus, an EIR device communicatively coupled to said system bus, the EIR device selected from the group consisting of: a bar code reading device, an RFID reading device, and a card reading device, said EIR device configured to perform one of: outputting raw message data containing an encoded message, outputting decoded message data corresponding to an encoded message;
an external computer communicatively coupled to said at least one EIR terminal via at least one communication network;
wherein said EIR terminal is configured, responsive to completing a decoding operation by said EIR device, to initiate a payment operation using said NFC reading device; and
wherein said EIR terminal is further configured, responsive to receiving a response from an NFC target supporting a payment protocol, to transmit a payment operation request to said external computer.

9. The data collection system of claim 8, wherein said external computer is provided by one of: a checkout register, a self-checkout register.

10. The data collection system of claim 8, wherein said at least one network is provided by one of: a wired network, a wireless network.

11. The data collection system of claim 8, wherein said EIR terminal is further configured, responsive to receiving a payment amount from said external computer, to transmit said payment amount to said NFC target.

12. The data collection system of claim 8, wherein said EIR terminal is further configured, responsive to receiving a payment amount from said external computer, to transmit said payment amount to said NFC target; and
wherein said EIR terminal is further configured, responsive to receiving a payment confirmation from said NFC target, to transmit said payment confirmation to said external computer.

13. The data collection system of claim 8, wherein said payment operation request comprises one of: credit card data, ACH transaction data.

14. The data collection system of claim 8, wherein said EIR terminal is further configured to transmit a customer loyalty profile update request to said external computer.

15. The data collection system of claim 8, wherein said EIR terminal is further configured to transmit a discount coupon process request to said external computer.
